# EUROPEAN PATENT APPLICATION

(11) **EP 4 516 362 A1**
(43) Date of publication of application: **05.03.2025**
(21) Application number: 23796875.5
(22) Date of filing: 28.04.2023
(51) Int. Cl.: A62B 7/04, A62B 7/12, A62B 7/10, A62B 9/00, F04D 27/00

(54) **OXYGEN BREATHING APPARATUS**

(30) Priority: 28.04.2022 KR 20220052891
(71) Applicant: Salix Inc., Goyang-si, Gyeonggi-do 10534 (KR); Lee, Seong Woo, Goyang-si, Gyeonggi-do 10214 (KR)
(72) Inventor: LEE, Seong Woo, Goyang-si, Gyeonggi-do 10214 (KR)
(74) Representative: Caspary, Karsten
(86) International application number: PCT/KR2023/005847
(87) International publication number: WO 2023/211236

(57) **Abstract**

The present disclosure provides an oxygen breathing apparatus. The present disclosure provides an oxygen breathing apparatus including a hose including one end portion, another end portion opposite the one end portion, and a connector provided between the one end portion and the other end portion and configured to allow a mouthpiece to be mounted thereon; a fan connected to the one end portion of the hose; an exhalation bag connected at one side to the fan, and fluidly connected at another side to the other end portion of the hose; an oxygen supply device configured to store oxygen, and connected to the exhalation bag; and a controller configured to control driving of the fan so that the fan forms a unidirectional air flow within the hose.

## Description

### Technical Field

The present disclosure relates to an oxygen breathing apparatus that may be used in a variety of industrial fields.

### Background Art

In general, portable oxygen breathing apparatuses are nowadays very useful in many fields. Oxygen breathing apparatuses are used in a variety of industrial fields, such as in industrial workplaces, natural disaster areas, or water recreation.

For example, at a fire scene, the air may contain contaminants or noxious substances harmful to the human respiratory system. A portable oxygen breathing apparatus may be useful to prevent a user from suffocating while waiting for medical assistance, and may be used in other therapeutic or medical applications as a supplemental oxygen source to assist the user's lungs in delivering sufficient amounts of oxygen to the blood. These conventional oxygen breathing apparatuses are very difficult for the general public to use in emergency situations due to the heavy weight of the oxygen tank, which reduces mobility and portability, as well as the need to manipulate the valve of the oxygen tank to supply oxygen to the mask, and are relatively expensive, making it economically burdensome to provide a large number of conventional oxygen breathing apparatuses in the field.

Therefore, recently, self-contained oxygen respirators that may generate oxygen from the wearer's breathing have been developed.

Because the oxygen breathing apparatus forms a circulatory structure by the inhalation and exhalation of the wearer, there are problems in that the temperature and humidity increase with prolonged wear and the wearer's discomfort index increases.

### Disclosure

### Technical Problem

The present disclosure is directed to provide an oxygen breathing apparatus that assists a user in breathing by adjusting negative and positive pressures within the oxygen breathing apparatus, and that has a cooling unit for comfortable breathing.

### Technical Solution

An aspect of the present disclosure provides an oxygen breathing apparatus including: a hose including one end portion, another end portion opposite the one end portion, and a connector provided between the one end portion and the other end portion and configured to allow a mouthpiece to be mounted thereon; a fan connected to the one end portion of the hose and forming a unidirectional air flow within the hose; an exhalation bag connected at one side to the fan, and fluidly connected at another side to the other end portion of the hose; an oxygen supply device configured to store oxygen, and connected to the exhalation bag; and a controller configured to control driving of the fan so that the fan forms a unidirectional air flow within the hose.

### Advantageous Effects

The oxygen breathing apparatus according to the present disclosure may provide a path for air generated by the inhalation and exhalation of a user to circulate within the oxygen breathing apparatus. In particular, an appropriate amount of oxygen may be mixed and circulated to assist the user's breathing, and the cooling unit may be provided on the one side to assist comfortable breathing.

### Description of Drawings

FIG. 1 illustrates an oxygen breathing apparatus according to embodiments of the present disclosure.
FIG. 2 is an exploded perspective view of the oxygen breathing apparatus of FIG. 1.
FIG. 3 is a cross-sectional view taken along A-A' line of FIG. 2.
FIG. 4 is a cross-sectional view taken along B-B' line of FIG. 2.

### Best Mode

An aspect of the present disclosure provides an oxygen breathing apparatus including: a hose including one end portion, another end portion opposite the one end portion, and a connector provided between the one end portion and the other end portion and configured to allow a mouthpiece to be mounted thereon; a fan connected to the one end portion of the hose and forming a unidirectional air flow within the hose; an exhalation bag connected at one side to the fan, and fluidly connected at another side to the other end portion of the hose; an oxygen supply device configured to store oxygen, and connected to the exhalation bag; and a controller configured to control driving of the fan so that the fan forms a unidirectional air flow within the hose. The oxygen breathing apparatus may further include a cooling unit connected to the exhalation bag and the other end portion of the hose, and configured to adjust the temperature of air supplied through the hose.

The cooling unit may include a cooling member connected at one side to the exhalation bag and another side to the other end portion of the hose, and configured to provide a passage through which air supplied from the exhalation bag flows, the cooling member being formed from a thermally conductive material.

The cooling member may include a plurality of protrusions protruding into the passage, the plurality of protrusions being formed from the same material as the cooling member.

The plurality of protrusions may have a structure extending in length in a direction from the one side to the other side, and are spaced apart from each other along an inner surface of the passage.

The cooling unit may further include: a case accommodating the cooling member therein; and a cooling medium accommodated within the case, and disposed on one side of the cooling member to transfer cold air to the cooling member.

The oxygen breathing apparatus may further include a filter disposed between the fan and the one end portion of the hose, and configured to purify and discharge air introduced from the one end portion of the hose.

The oxygen breathing apparatus may further include: a first sensor disposed between the fan and the exhalation bag, and configured to measure a flow rate of air introduced from the fan; and a second sensor disposed between the exhalation bag and the other end portion of the hose, and configured to measure a flow rate of air introduced from the exhalation bag, wherein the controller controls the driving of the fan according to results measured by the first sensor and the second sensor.

The controller may measure breathing of a user using the first sensor and the second sensor, control the fan to create a negative pressure within the oxygen breathing apparatus in a case of exhalation, and control the fan to create a positive pressure within the oxygen breathing apparatus in a case of inhalation.

The oxygen supply device may include: a storage container disposed detachably; and a regulator configured to adjust a pressure of oxygen supplied from the storage container and supply the pressure-adjusted oxygen to the exhalation bag.

Other aspects, features, and advantages in addition to the foregoing will become apparent from the following drawings, claims, and detailed description of the present disclosure.

### Mode for Invention

Hereinafter, example embodiments of the present disclosure will be described in detail with reference to the accompanying drawings, in which identical or corresponding components are designated by the same reference numerals and repeated descriptions thereof are omitted.

Embodiments may have various modifications, and thus specific embodiments are illustrated in the drawings and described in detail in the detailed description. The effects and features of the embodiments and how to accomplish the effects and features will be apparent with reference to the following detailed description together with the drawings. However, the embodiments are not limited to the embodiments disclosed below, but may be implemented in various forms.

In the following embodiments, terms, such as first and second, as used herein do not have a limited meaning but are used for the purpose of distinguishing one element from another.

In the following examples, singular forms include plural referents unless the context clearly indicates otherwise.

In the following embodiments, terms, such as "comprising" or "having", are intended to imply the presence of a feature or element described in the specification and do not preclude the possibility that one or more other features or elements may be added.

In the following embodiments, it will be understood that when a portion, such as a unit, area, or element, is referred to as being above or on another portion, the portion may be directly above or on the other portion or an intervening portion, such as a unit, area, or element, may also be present between the two portions.

In the following embodiments, it will be understood that terms, such as "connect" or "couple", do not necessarily mean a direct and/or fixed connection or coupling of two members, unless the context clearly indicates otherwise, and do not exclude the presence of other members provided between the two members.

The presence of any features or elements described in the specification is implied, and the possibility of the addition of one or more other features or components is not excluded.

In the drawings, elements may be exaggerated or reduced in size for ease of explanation. For example, the sizes and thicknesses of the respective elements shown in the drawings are arbitrary for ease of explanation, and therefore the following embodiments are not necessarily limited thereto.

In the following, the oxygen breathing apparatus according to embodiments of the present disclosure may be applied to a variety of industrially available breathing apparatus. The oxygen breathing apparatus according to embodiments of the present disclosure may be applied to various types of breathing apparatus, such as those used in industrial workplaces, natural disasters, water recreation, and the like.

In other words, the oxygen breathing apparatus according to embodiments of the present disclosure is not limited to a shape form, place, or use, and may be applied to a variety of structures connected to a plurality of mouthpieces or oxygen storage containers. However, for ease of explanation, the following description will focus on the case of a portable oxygen breathing apparatus that enables self-oxygen breathing by circulating air by the inhalation and exhalation of the user.

The oxygen breathing apparatus according to the disclosure relates, for example, to a breathing apparatus that enables self-oxygen breathing, and more particularly to a breathing apparatus that enables self-oxygen breathing, in which the breathing apparatus may be conveniently stored and carried by remaining in a compressed state, and may be easy to use by circulating the air exhaled during the breathing process to promote the safety of the user.

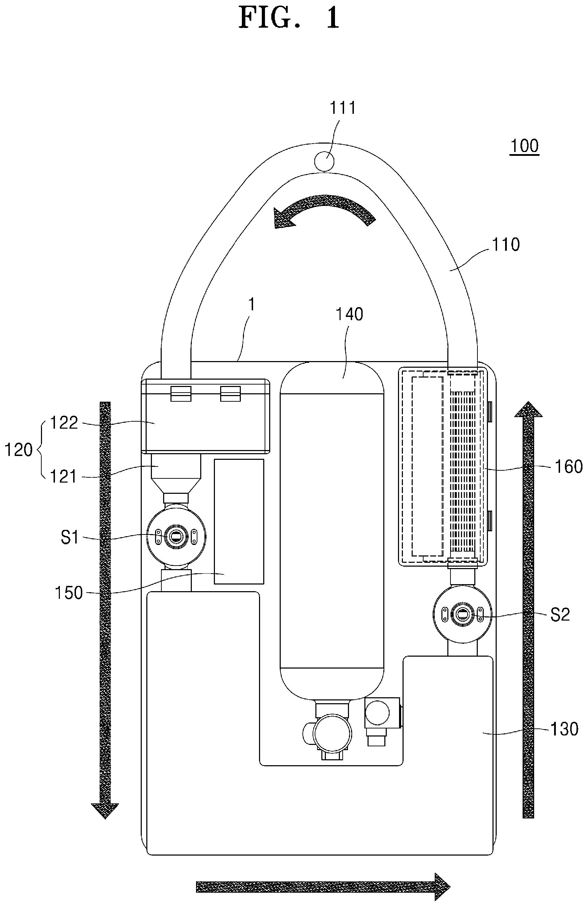

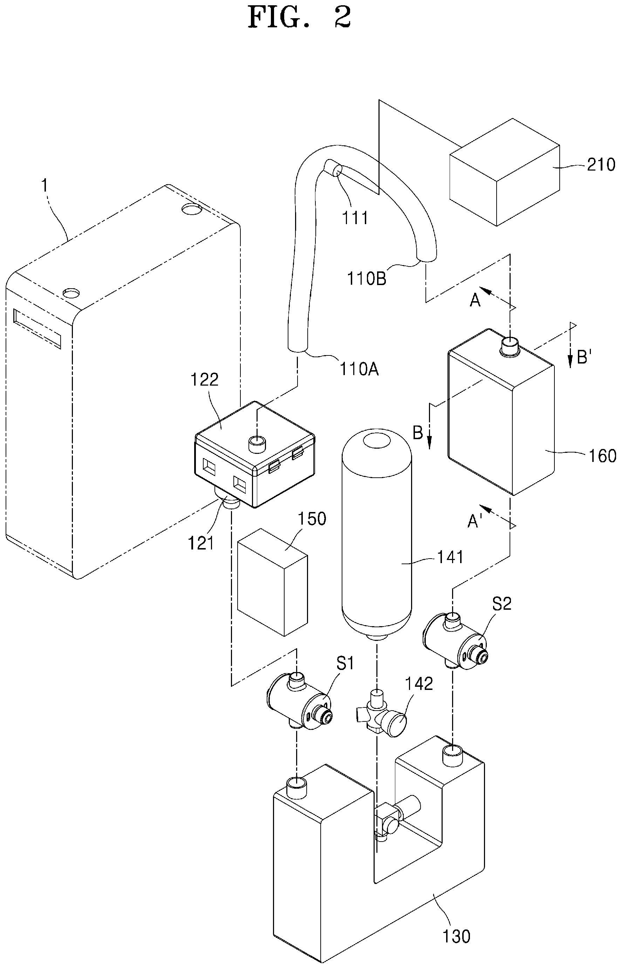

FIG. 1 illustrates an oxygen breathing apparatus according to embodiments of the present disclosure, and FIG. 2 is an exploded perspective view of the oxygen breathing apparatus of FIG. 1.

Referring to FIGS. 1 and 2, the oxygen breathing apparatus 100 according to embodiments of the present disclosure may include a hose 110, a fan 121, an exhalation bag 130, an oxygen supply device 140, and a controller 150. The oxygen breathing apparatus 100 according to one embodiment of the present disclosure may further include a cooling unit 160.

The components of the oxygen breathing apparatus 100, other than the hose 110, may be mounted within the housing 1. For example, the housing 1 may have a predetermined amount of space to protect the components mounted therein from impact or to accommodate the respective components therein in such a manner that the oxygen breathing apparatus 100 is portable.

The hose 110 may extend through the housing 1 such that a portion of the hose 110 is exposed to the outside of the housing 1. **In** the oxygen breathing apparatus 100, the hose 110 may be disposed between and connected to components that form flow of air. The hose 110 may form a circular hollow section that extends from one end to the other and forms a passage for air to travel in a unidirectional manner. The hose 110 may be formed of a flexible tube having flexible properties, and may be formed from an elastic material that may freely pivot up and down and side to side, such as a synthetic resin material, rubber, or silicone.

The hose 110 may include one end portion 110A, another end portion 110B opposite the one end portion 110A, and a connector 111 provided between the one end portion 110A and the other end portion 110B.

The one end portion 110A may be disposed on one side of the hose 110 and may be connected to the fan 121. The one end portion 110A may be an outlet through which the exhaled breath of the user is discharged, and may form a passage for air to be introduced into the oxygen breathing apparatus 100.

The other end portion 110B may be disposed on another side of the hose 110, and may be connected to the exhalation bag 130. The other end portion 110B may form a passage for air discharged from the exhalation bag 130 to circulate through the hose 110. In this case, the diameters of the one end portion 110A and the other end portion 110B may be set to be the same as each other, but may be set differently depending on the application.

The connector 111 may be provided between the one end portion 110A and the other end portion 110B and configured to allow a mouthpiece 210 to be mounted thereon. The connector 111 may be configured in any shape to which the mouthpiece 210 worn by the user is connected, and may be configured simply as a hole, or may be configured in the shape of a tube connected to the mouthpiece 210.

For example, the connector 111 may be configured in the shape of a tube to guide flow of air flowing through the one end portion 110A and the other end portion 110B to reach the mouthpiece 210 worn by the user.

Here, the mouthpiece 210 may be an assembly that is received in the oral or facial region of a user, and may be configured as a disposable cartridge that has a replacement cycle as desired.

The oxygen breathing apparatus 100 may be configured to have a circulation structure such that air introduced through the one end of the hose 110 circulates and flows to the other end. For example, when a user exhales while wearing the oxygen breathing apparatus 100, the exhaled air flows through the connector 111 and into the one end portion 110A or the other end portion 110B of the hose 110. The air flowing into the one end portion 110A may be directed in one direction by driving the fan 121 connected to the one end portion 110A.

The fan 121 may be disposed on the one end portion 110A of the hose 110 to create a positive pressure or a negative pressure for air to flow. The fan 121 may be disposed such that one side of the fan 121 is connected to the one end portion 110A of the hose 110, and another side of the fan 121 is connected to the exhalation bag 130. The fan 121 may perform a blowing operation or a suction operation so that air flows into the exhalation bag 130.

A filtration device may be provided separately between the one end portion 110A of the hose 110 and the fan 121 to purify and circulate the incoming air. In an example, a filter 122 may be disposed between the one end portion 110A of the hose 110 and the fan 121.

The filter 122 may purify and discharge the air introduced from the one end portion 110A of the hose 110. That is, the air inhaled by the user's breathing may pass through the filter 122 to filter out impurities and be purified. For example, the filter 122 may have embedded therein materials, such as activated carbon and sodium hydroxide, which may remove carbon dioxide and moisture. That is, the oxygen breathing apparatus 100 may remove and discharge carbon dioxide and the like contained in the user's exhaled air by causing the exhaled air to pass through the materials embedded in the filter 122.

As the air filtered by the filter 122 passes through the filter 122, the pressure of the air is reduced and the speed of movement of the air is reduced, but the fan 121 may be actively operated to overcome the pressure drop occurring in the filter 122.

The exhalation bag 130 may include a structure having one side connected to the fan 121 and another side fluidly connected to the other end portion 110B of the hose 110. The exhalation bag 130 may store the air introduced through the fan 121 from the one end portion 110A of the hose 110. The exhalation bag 130 may be configured to discharge the air to the other end portion 110B connected to the other side when the pressure increases to or above a predetermined pressure within the exhalation bag 130.

The air introduced into the exhalation bag 130 may be mixed with oxygen released from the oxygen supply device 140 and discharged to the other end portion 110B. The oxygen supply device 140 may store oxygen and be connected to the exhalation bag 130.

The oxygen supply device 140 may include a storage container 141 and a regulator 142. Specifically, the oxygen supply device 140 may include a storage container 141 configured to store oxygen to be supplied to the exhalation bag 130 and a regulator 142 configured to decompress the pressure of the oxygen discharged from the storage container 141.

The storage container 141 may have an internal space and store a predetermined amount of compressed oxygen.

The regulator 142 may be disposed at the inlet of the storage container 141 to decompress oxygen discharged from the storage container 141 at a high pressure so that an appropriate amount of oxygen may be supplied to the exhalation bag 130.

In addition, the storage container 141 may be detachably mounted within the oxygen breathing apparatus 100 so that the storage container 141 may be replaced as a consumable. The regulator 142 may be disposed to be coupled to the inlet of the storage container 141. The regulator 142 may maximize fluid flow at a given flow resistance, maximize a pressure drop at a given flow rate, or perform both of the above functions sequentially.

The oxygen breathing apparatus 100 may have a controller 150 disposed to control the output of the fan 121 or to adjust the internal flow rate. The controller 150 may adjust the internal pressure of the oxygen breathing apparatus 100 to allow the user to maintain comfortable breathing.

The controller 150 may control the operation of the fan 121 such that the fan 121 creates a unidirectional air flow within the hose 110. In an example, the controller 150 may control the operation of the fan 121 based on the results measured from a first sensor S1 and a second sensor S2.

The first sensor S1 may be disposed between the fan 121 and the exhalation bag 130, and may measure the flow rate of air introduced from the fan 121.

The second sensor S2 may be disposed between the exhalation bag 130 and the other end portion 110B, and may measure the flow rate of air introduced from the exhalation bag 130.

The controller 150 may receive measurement data from the first sensor S1 and the second sensor S2, and may control the fan 121 using the measurement data to create a negative pressure within the oxygen breathing apparatus 100 in the case of exhalation, and to control the fan 121 to create a positive pressure within the oxygen breathing apparatus 100 in the case of inhalation.

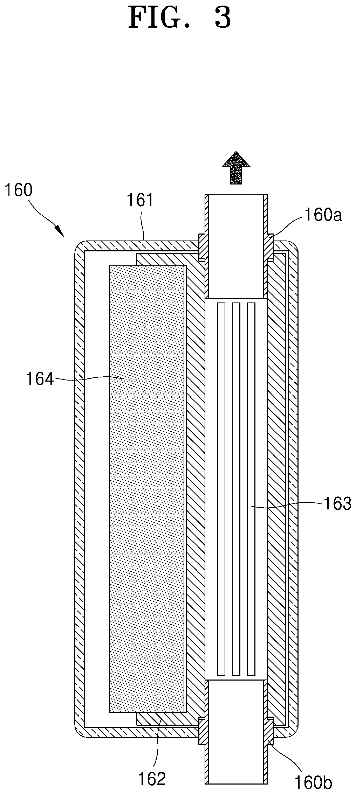

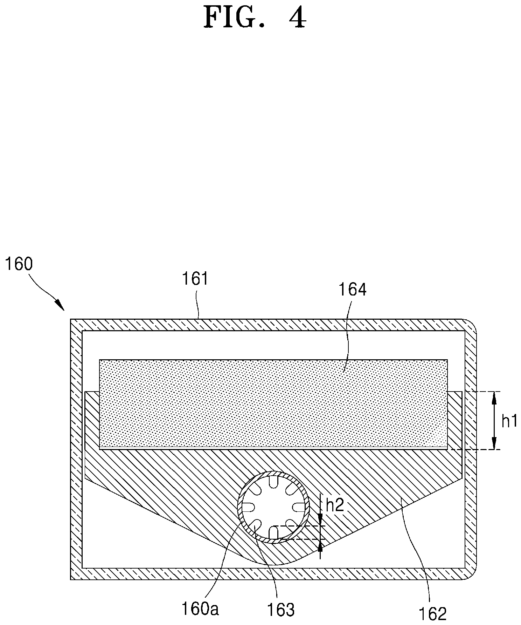

FIG. 3 is a cross-sectional view taken along A-A' line of FIG. 2, and FIG. 4 is a cross-sectional view taken along B-B' line of FIG. 2.

Referring now to FIGS. 3 and 4, the oxygen breathing apparatus 100 may further include the cooling unit 160 connected to the exhalation bag 130 and the other end portion 110B.

The temperature of air circulated within the oxygen breathing apparatus 100 may increase to or above a predetermined temperature due to the exhalation and inhalation of the user. In this case, the user may feel uncomfortable due to the increased temperature of the air after an extended period of time since wearing the oxygen breathing apparatus 100. The oxygen breathing apparatus 100 may be provided with the cooling unit 160 to cool the circulated air to a temperature equal to or below a predetermined value to assist the user in breathing comfortably.

For example, the cooling unit 160 may adjust the temperature of air supplied through the hose 110. The cooling unit 160 may include a case 161, a cooling member 162, protrusions 163, and a cooling medium 164.

The case 161 may include an interconnectable assembly that accommodates the cooling member 162 therein. A longitudinal top portion of the case 161 may form an open area to be connected to the other end portion 110B of the hose 110, and a bottom portion of the case 161 may form an open area to be connected to another side of the exhalation bag 130.

A first connecting tab 160a and a second connecting tab 160b may be disposed on the top portion and the bottom portion of the case 161. The first connecting tab 160a may be fitted to the top portion and the second connecting tab 160b may be fitted to the bottom portion to connect and fix the cooling unit 160 to the hose 110 and the exhalation bag 130. The case 161 may be formed from an insulating material. The case 161 may be formed from an insulating material having low thermal conductivity to prevent cooling loss of the cooling medium 164 accommodated therein. In another aspect of the present disclosure, an insulating sheet fixed to the inner surface of the case 161 to achieve maximum cooling efficiency may be provided.

The cooling member 162 may be connected at one side to the exhalation bag 130 and at another side to the other end portion 110B of the hose 110. The cooling member 162 may provide a passage through which air supplied from the exhalation bag 130 flows to guide the introduced air to flow and be cooled through the passage.

The cooling member 162 is formed from a thermally conductive material, and one surface thereof may be in contact with the cooling medium 164 to cool the air flowing within the cooling member 162 using the transferred cold air.

Specifically, the cooling member 162 may have a space in one side that accommodates the cooling medium 164 for contact with the cooling medium 164. For example, the cooling member 162 may include a protrusion 1621 having a height set as a first height H1 on the side which the cooling medium 164 contacts. The first height H1 may be less than or equal to the height of the cooling medium 164. For example, the protrusion 1621 may include a pair of sidewalls having a first height h1 to accommodate the cooling medium 164 therein. Accordingly, the cooling medium 164 accommodated in the cooling member 162 may be fixed and not dislodged by normal movements of the user.

The cooling member 162 may include protrusions 163 protruding into the passage formed by the cooling member 162. The protrusions 163 protruding into the cooling member 162 may be at least one, and the cross-sectional shape of the protrusions 163 may be rectangular, semicircular, oval, conical, or the like. Although the protrusions 163 according to embodiments of the present disclosure are shown as a plurality of protrusions 163, the shape of the protrusions 163 is not limited thereto, and may be selected from various shapes and structures depending on the application.

The plurality of protrusions 163 may be formed from the same material as the cooling member 162. Depending on the shape of the protrusions 163 protruding into the cooling member 162, the area in contact with the air flowing through the passage within the cooling member 162 may be increased, thereby enabling the cooling unit 160 to cool the air circulated within the oxygen breathing apparatus 100 in a short time with a simple structure.

The plurality of protrusions 163 may have a structure extending in length in a direction from the one side to the other side, and may be spaced apart from each other along the inner surface of the passage formed by the cooling member 162. For example, the protrusions 163 may have a height set as a second height H2. The protrusions 163 may be set as a structure in which the protrusions 163 having the second height H2 are regularly spaced apart, but the spacing between the protrusions 163 may be set narrower, and the area of the protrusions 163 may be set wider than shown in the figures.

The cooling medium 164 may be accommodated within the case 161, and may be disposed on one side of the cooling member 162 to transfer the cold air to the cooling member 162. The cooling medium 164 may include a phase change material, and the phase change material may be a latent heat material, a heat storage material, a cold storage material, or a thermoregulatory material. The material of the cooling medium 164 may be water, a mixture of water and a phase change material (PCM), or an aqueous solution.

In a first aspect of the present disclosure, the cooling medium 164 is configured to be a single one and the resulting storage structure of the cooling member 162 is shown, but this is not intended to be limiting, and the cooling member 162 may be configured to form a plurality of partitions within the case 161 and to store two or more cooling media 164. Accordingly, the cooling efficiency of the cooling unit 160 may be improved over that of conventional cooling units.

The oxygen breathing apparatus 100 according to the present disclosure allows a user to exhale naturally or by applying negative pressure to the respiratory system, and the exhaled air is delivered through the hose 110. The delivered air may be circulated to form a cycle by passing through the fan 121 and the exhalation bag 130, and the cycle may be repeated continuously to assist the user's breathing or to control the user's breathing. The oxygen breathing apparatus 100 according to the present disclosure may also maintain an oxygen concentration of 21% or more, thereby enabling breathing equivalent to the atmospheric air. The user may breathe comfortably through cooled air circulated through the cooling unit 160.

The present disclosure has been described as above with reference to embodiments shown in the drawings, which are exemplary only, and a person skilled in the art will appreciate that various modifications and variations of the embodiment are possible. Accordingly, the true scope and spirit of the present disclosure shall be defined only by the appended claims.

## Claims

1. An oxygen breathing apparatus comprising:
a hose comprising one end portion, another end portion opposite the one end portion, and a connector provided between the one end portion and the other end portion and configured to allow a mouthpiece to be mounted thereon;
a fan connected to the one end portion of the hose and forming a unidirectional air flow within the hose;
an exhalation bag connected at one side to the fan, and fluidly connected at another side to the other end portion of the hose;
an oxygen supply device configured to store oxygen, and connected to the exhalation bag; and
a controller configured to control driving of the fan so that the fan forms a unidirectional air flow within the hose.

2. The oxygen breathing apparatus of claim 1,
further comprising a cooling unit connected to the exhalation bag and the other end portion of the hose, and configured to adjust the temperature of air supplied through the hose.

3. The oxygen breathing apparatus of claim 2,
wherein the cooling unit comprises
a cooling member connected at one side to the exhalation bag and another side to the other end portion of the hose, and configured to provide a passage through which air supplied from the exhalation bag flows,
the cooling member being formed from a thermally conductive material.

4. The oxygen breathing apparatus of claim 3,
wherein the cooling member comprises a plurality of protrusions protruding into the passage, the plurality of protrusions being formed from the same material as the cooling member.

5. The oxygen breathing apparatus of claim 4,
wherein the plurality of protrusions have a structure extending in length in a direction from the one side to the other side, and are spaced apart from each other along an inner surface of the passage.

6. The oxygen breathing apparatus of claim 3,
wherein the cooling unit further comprises:
a case accommodating the cooling member therein; and
a cooling medium accommodated within the case, and disposed on one side of the cooling member to transfer cold air to the cooling member.

7. The oxygen breathing apparatus of claim 1, further comprising
a filter disposed between the fan and the one end portion of the hose, and configured to purify and discharge air introduced from the one end portion of the hose.

8. The oxygen breathing apparatus of claim 1, further comprising:
a first sensor disposed between the fan and the exhalation bag, and configured to measure a flow rate of air introduced from the fan; and
a second sensor disposed between the exhalation bag and the other end portion of the hose, and configured to measure a flow rate of air introduced from the exhalation bag,
wherein the controller controls the driving of the fan according to results measured by the first sensor and the second sensor.

9. The oxygen breathing apparatus of claim 8,
wherein the controller measures breathing of a user using the first sensor and the second sensor, controls the fan to create a negative pressure within the oxygen breathing apparatus in a case of exhalation, and controls the fan to create a positive pressure within the oxygen breathing apparatus in a case of inhalation.

10. The oxygen breathing apparatus of claim 1,
wherein the oxygen supply device comprises:
a storage container disposed detachably; and
a regulator configured to adjust a pressure of oxygen supplied from the storage container and supply a pressure-adjusted oxygen to the exhalation bag.
